# EUROPEAN PATENT SPECIFICATION

(11) **EP 1 594 776 B1**
(45) Date of publication and mention of the grant of the patent: **05.09.2007**
(21) Application number: 04701135.8
(22) Date of filing: 09.01.2004
(51) Int. Cl.: B65G 17/08

(54) **CONVEYOR DEVICE**
FÖRDERVORRICHTUNG
DISPOSITIF TRANSPORTEUR

(30) Priority: 10.01.2003 NL 1022344
(43) Date of publication of application: 16.11.2005
(73) Proprietor: Ilmer, Marinus Tieme, 3831 DX Leusden (NL); Ilmer, Pieter, 3831 DX Leusden (NL)
(72) Inventor: Ilmer, Marinus Tieme, 3831 DX Leusden (NL); Ilmer, Pieter, 3831 DX Leusden (NL)
(74) Representative: Nederlof, Etienne C.
(86) International application number: PCT/NL2004/000019
(87) International publication number: WO 2004/063059

(56) References cited:
- EP-A- 0 239 660
- US-A- 4 040 302
- US-A- 4 084 687
- US-A1- 2002 148 708

## Description

The invention relates to a conveyor device comprising a conveyor belt having a conveyance surface for conveying in a conveyance direction along a conveyance path.

In practice quite some conveyor systems and conveyor belts are known for conveying objects along for instance treatment stations.

There are for instance toothed conveyor belts by means of which the movement of objects in the conveyance direction can be accurately determined. There are also conveyor devices having belts consisting of links for conveying for instance foodstuff.

From EP-A1-239.660 a so-called conveyor belt is known, provided with a belt consisting of a carrier layer of a textile that is tensile strain resistant on which a flexible lagging is glued which is provided with wear-resistant elements that are incorporated in there and which extend over the surface of the conveyor belt in order to thus result in a wear-resistant layer. This conveyor belt is drawingly driven. A problem of this conveyor belt is that a bend can hardly, if at all, be made, particularly a bend in the horizontal plane.

From US patent 4.040.302 a chain conveyor is known on which pallets can be transported in a conveyance direction along a conveyance path. Separate pallets are here conveyed on two driven chain conveyors. No conveyance surface is offered here for conveying along a conveyance path.

US patent application US-A1-2002/0148708 regards a conveyor device according to the preamble of claim 1, and made of strips that are mutually hinged to one another. Here as well a bend in the horizontal plane can hardly, if at all, be made. A further conveyor device with elastic strips is known form US Patent 4084687.

A problem of the known conveyor devices is that realising changes of direction of the conveyance direction, particularly bends in the horizontal plane, is a problem.

It is an object of the present invention to offer an alternative conveyor device.

To that end the invention provides a conveyor device according to claim 1.

By equipping the conveyor device according to the invention with a conveyor belt provided with elastically compressible elements, a conveyor device having new user options is created, particularly a conveyor device by which means it is possible to easily realise changes of direction of the conveyance direction, particularly bends, and more particularly bends in the horizontal plane.

Differences in height as well, possibly combined with changes of direction in the horizontal plane, can easily be realised with the conveyor device according to the invention.

In addition the conveyor device according to the invention offers the possibility to realise a conveyance surface on the conveyor belt wherein the position of objects on the conveyor belt during conveyance does not change or hardly changes.

Particularly in bends and changes of height it becomes possible to offer a conveyor device wherein the position of objects on a conveyor belt hardly changes, if at all, particularly the position of objects with respect to each other on the conveyor belt. This will result in large production technical advantages.

In addition due to the simple structure, very many drive possibilities can be used in such a conveyor device according to the invention.

In one embodiment of the conveyor device according to the invention the elastically compressible elements are elastically compressible in the conveyance direction.

In one embodiment the conveyor belt forms a circulating, closed belt, preferably having a practically closed conveyance surface.

In one embodiment the compressible elements are elastically compressible synthetic or plastic elements. In an embodiment thereof the compressible elements are made of an elastic, foamed synthetic or plastic material. The compressible elements particularly are substantially block-shaped having a width practically equal to the width of the conveyor belt.

In one embodiment of the conveyor device according to the invention it is furthermore provided with a guide for guiding the conveyor belt along the conveyance path.

In one embodiment of the conveyor device according to the invention, the conveyor belt is further provided with elements that are bend stiff in the plane of conveyance. In an embodiment thereof, said elements comprise plate parts, having their surface in the conveyance direction. The plate parts have been arranged between the compressible elements. In a further embodiment the plate parts have been provided with an extension to offer engagement to a drive. In another embodiment the plate parts have means to cooperate with the guide. In a preferred embodiment the rigid elements have both means to offer engagement to a drive and means to cooperate with the guide to guide the conveyor belt along the conveyance path.

In one embodiment of the conveyor device according to the invention, the longitudinal axes of the rigid elements are situated along the width of the conveyor belt, and can be mutually moved in the conveyance direction.

In one embodiment of the conveyor device it has alternately rigid elements and compressible elements.

In one embodiment of the conveyor device according the invention, the compressible elements form compressible segments in the conveyor belt.

In one embodiment of the conveyor device according to the invention, the conveyor belt has a conveyor belt width, over which the compressible synthetic elements substantially extend.

In one embodiment of the conveyor device according to the invention, the compressible synthetic elements have an element width and an element length in the conveyance surface, wherein the compressible synthetic elements in the conveyance surface are practically contiguous for forming a practically continuous, contiguous conveyance surface.

In one embodiment of the conveyor device according to the invention, rigid elements extend in the conveyor belt width between the compressible synthetic elements, which rigid elements are rigid in the conveyance direction. In an embodiment thereof the rigid elements have an abutment surface between the compressible synthetic elements that extends over nearly the conveyor belt width.

In one embodiment of the conveyor device according to the invention, the conveyor device is furthermore provided with a drive for driving the conveyor belt, and the rigid elements each comprise at least one engagement member onto which the drive is able to engage for driving the conveyor belt.

In one embodiment of the conveyor device according to the invention the drive of the conveyor belt is adapted for pushingly driving the conveyor belt.

The invention further relates to a synthetic part, suitable and intended for use as a compressible synthetic element in a conveyor belt in a conveyor device as described above or shown in the drawings, having a closed conveyance surface that extends over the length and the width and having two stop surfaces from the plane of conveyance, wherein the plane of conveyance of the synthetic part, when compressed, for 50% at the most along the length, deforms less than 10% of the height of the synthetic part.

The synthetic part is made of a foamed synthetic material having substantially closed cells.

The invention further relates to a connection part, suitable and intended for use as rigid element in a conveyor belt in a conveyor device as described above or shown in the drawings, comprising a rigid plate part having stop surfaces on both sides, and at both ends provided with engagement members onto which a force perpendicular to the stop surfaces is able to engage, guide members onto which a force in the plane of the plate part is able to engage, and spacers which extend from the plane of the plate part.

The connection part it is made of metal, preferably selected from the group of aluminium, iron and steel that may or may not be stainless steel.

The connection part, may also be made of a rigid synthetic material, preferably selected from the group of PVC, polycarbonate, nylon, that may or may not be reinforced with fibres, such as wood, carbon fibre, glass fibre, aramid or a combination thereof. Certainly in combination with the synthetic parts as described above, the conveyor belt can be made very lightweight and mass-produced.

The invention will be further elucidated on the basis of exemplary embodiments of conveyor devices according to the invention, in which:
Figure 1 shows an embodiment of a conveyor device according to the invention seen diagonally from above;
Figure 2 shows a top view of a conveyor device with a rack-and-pinion drive;
Figure 3 shows a cross-section of the conveyor device according to figure 1 perpendicular to the conveyance direction;
Figure 4 shows a combination of a compressible element and a rigid element;
Figures 5A-5C show an assembly of the compressible elements and the rigid elements with the compressible elements free (5A), compressed (5B), and in a bend (5C);
Figures 6-10 show various embodiments of the compressible element;
Figures 11-27 show various embodiments of the rigid elements;
Figure 28 shows a conveyor device according to the invention with a rack-and-pinion drive;
Figure 29 shows a conveyor device according to the invention with an alternative rack-and-pinion drive;
Figure 30 shows the conveyor device according to the invention provided with a friction-based drive;
Figure 31 shows a conveyor device according to the invention provided with a synchronous-belt or toothed belt drive;
Figure 32 shows a conveyor device according to the invention provided with a magnetic drive;
Figure 33 shows a conveyor device according to the invention provided with a sprocket drive;
Figures 34A-C show a diagonal top view, a perpendicular view and a cross-section, respectively, of a support and guide for a conveyor device according to the invention;
Figures 35A-C show a top view of a conveyor device according to the invention and cross-sections of AA and BB of a circulating part of the conveyor device according to the invention, respectively;
Figures 36A-E show a detail view of an embodiment of a rigid element according to the invention;
Figure 37 shows various modular parts of the guide of the conveyor device according to the invention.

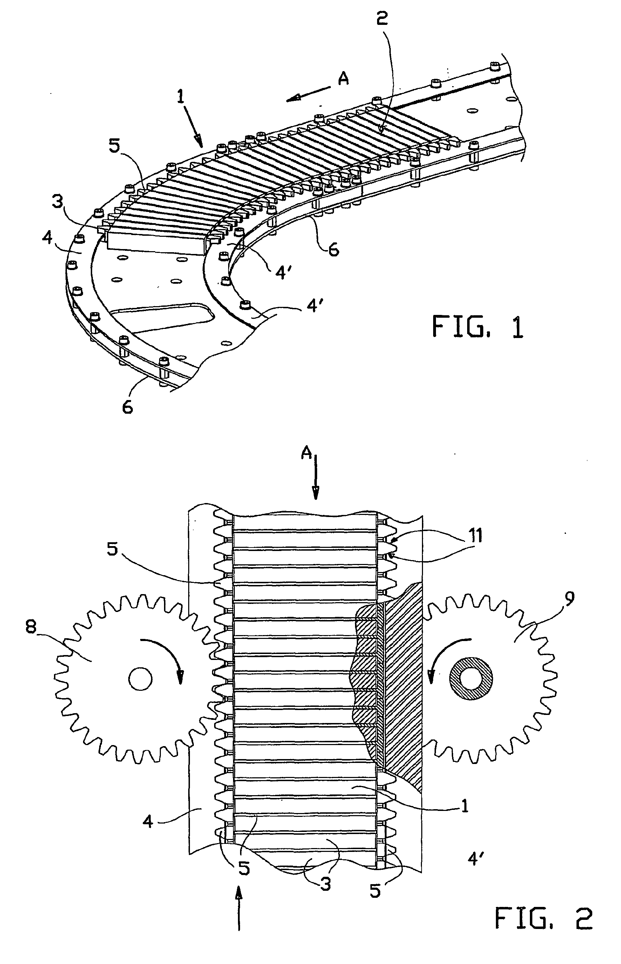

Figure 1 shows a conveyor device 1 according to the invention seen diagonally from above. The conveyor device 1 is provided with a conveyance surface for conveying objects situated thereon in conveyance direction A. The conveyor belt 2 here defines a practically closed conveyance surface. The conveyor belt 2 is -at least partially- formed by compressible elements 3 and rigid elements 5 or girders. The conveyor device 1 is furthermore provided on both sides with transverse guides 4 and 4', in this case transverse girders 4 and 4', for guiding the conveyor belt 2 of the conveyor device 1 along a conveyance path. In this picture part of the soft and hard elements has been left out for giving a clear view. In operation the soft and hard elements form a closed circulating path or conveyor belt, such that the compressible elements in the conveyance direction A are pre-biassed by a compression force F that is parallel to the conveyance direction A yet counter to it. The conveyance path is filled with compressible and rigid elements to such an extent that the compressible elements are at least partially compressed.

Figure 2 shows a conveyor device 1 according to the invention of figure 1 in top view. The conveyor device 1 in this case is provided with a rack-and-pinion drive by means of toothed wheels 8 and 9. For the stability of the drive said toothed wheels 8 and 9 are arranged on both sides of the conveyor belt. In the depicted embodiment the conveyor belt 2 is provided with compressible elements 3 alternating with, at least in the conveyance direction, rigid elements 5. Preferably the rigid elements 5 are also rigid in directions from/out of the plane of conveyance. As a result, the rigid elements offer stiffness and bearing capacity to the conveyor belt. In addition the rigid elements preferably are also torsion stiff along the longitudinal axis of the element, that means the direction perpendicular to the conveyance direction and in the plane of conveyance.

In order to be able to drive the conveyor belt 2, the rigid elements 5 are provided with engagement members 11 that are able to cooperate with the drive means, particularly the toothed wheels 8 and 9, to move the conveyor belt in conveyance direction A. The engagement members 11 to that end have an engagement surface onto which the teeth of the toothed wheels 8 and 9 are able to engage and able to exert a force when they rotate in the direction of the indicated arrow. The rigid elements 5 here fulfil several functions. First of all they offer engagement members to the drive. Furthermore they provide engagement surfaces for guiding. In addition they provide a compression force on the compressible elements.

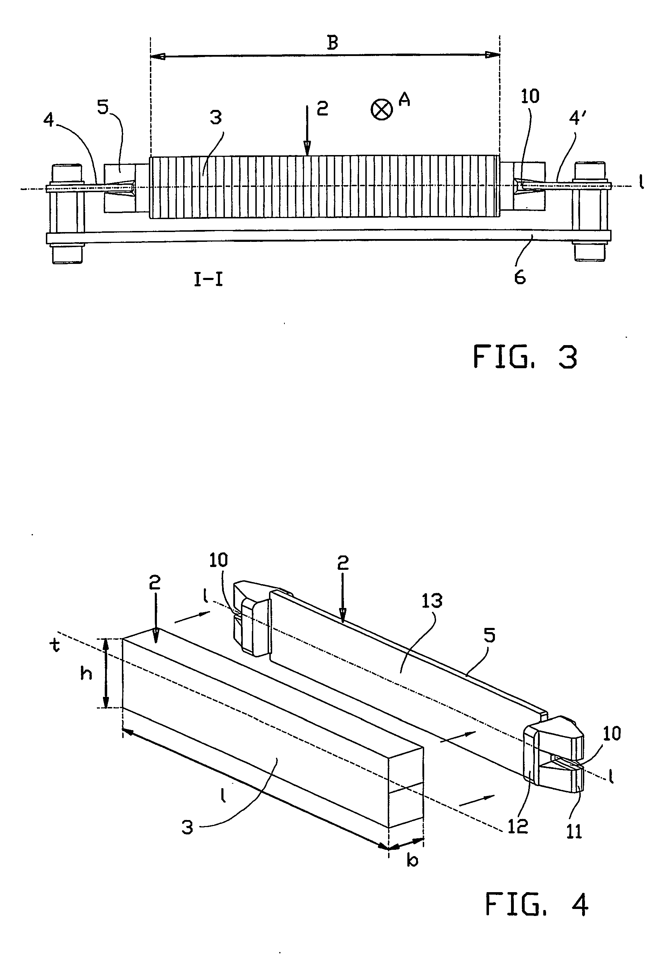

Figure 3 shows a cross-section of the conveyor device 1 perpendicular to the conveyance direction A of the conveyor device 1 of figures 1 and 2.

In this figure it can clearly be seen how the rigid elements 5 are provided with a guiding groove 10 parallel to the conveyance surface 2 having conveyor belt width B, in which the transverse girders 4 and 4' run for exerting a force perpendicular to the conveyance surface for guiding the conveyor belt with the compressible elements 3 and the rigid elements 5 along the conveyance path. It is of course also possible to reverse the functionality, that means providing the rigid elements 5 with parts protruding parallel to the conveyance surface and providing the guides 4, 4' with a guiding groove. In the figure the longitudinal axis or centre line I of the rigid elements is indicated.

Figure 4 shows an assembly of a rigid element or girder 5 and a compressible element 3. The rigid element 5, as already stated before, preferably is both rigid in the conveyance direction A and perpendicular to it and moreover torsion rigid. The element has plate part 13 and continuations on both sides outside of the edge of the conveyor belt for offering an engagement for driving and guiding. In this embodiment the rigid element 5 is provided with a guiding groove 10 and is provided with an engagement member 11 onto which engagement means are able to exert a force in the conveyance direction A for propelling the conveyor belt of compressible and rigid elements. The rigid elements 5 are furthermore provided with a stop for exerting a compression or propelling force on the compressible elements. In this embodiment the rigid elements 5 are provided for that purpose with an abutment surface 13. The compressible elements 3 are then provided with a surface cooperating with said abutment surface 13, so that a driving force exerted on the rigid elements, particularly the engagement members 11, is transmitted in the conveyance direction A. In many cases the compressible elements will be compressed in the conveyance direction to such an extent that the spacers of consecutive rigid elements touch each other. In that case the driving force is transmitted or exerted by means of these stops 12 that also serve as spacers. In that case they have a double function. The compressed elements have a width b, a height h and a length I, and a centre line t. The compressible element 3 shown is substantially block-shaped.

Furthermore the rigid elements are provided with a stop 12, preferably on both sides, which protrude in conveyance direction A or in its opposite direction. The purpose of said stop is to optionally in cooperation with stops 12 of the next rigid elements, limit the degree of compression of the compressible elements.

From this figure and the preceding figures it is clear how the rigid parts or rigid elements 5 jointly keep the compressible elements 3 together. In a preferred embodiment the compressible elements 3 are glued onto the rigid elements 5, optionally only along the upper edge near the conveyance surface 2. As a result a practically closed conveyance surface 2 is realised.

The combination of the rigid elements 5 and the compressible elements 3 is formed such that jointly they result in a level, continuous and practically closed conveyor belt having a closed conveyance surface 2. In this embodiment, as can be seen in figure 2, the compressible elements 3 are compressed to such an extent by means of the rigid elements 5, that the side members or stops 12 of the rigid elements almost touch each other. As a result the side members form stops or spacers 12 due to which the compressible elements 5 are not compressed further than is desirable. It can clearly be seen here that the distance of the longitudinal axes I of the compressible elements can change with respect to each other. The angle of said longitudinal axis in particular can change, due to which a bend can be realised.

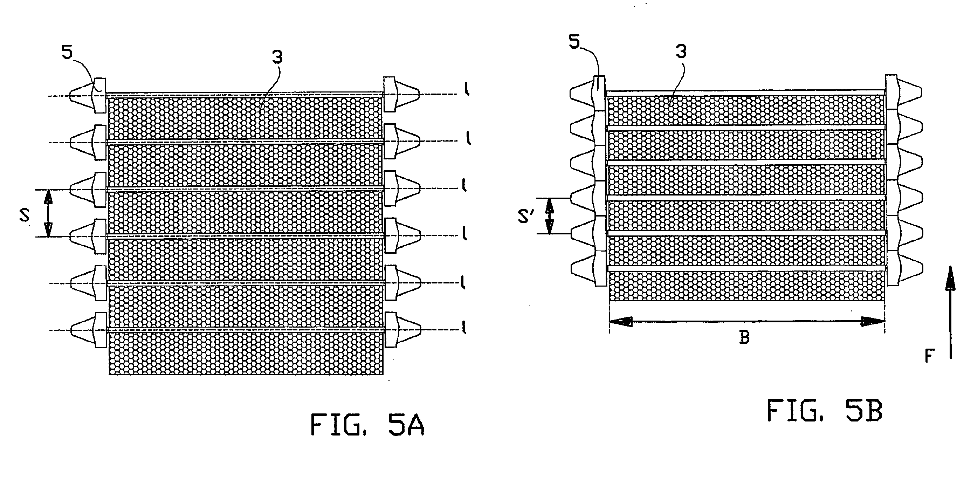

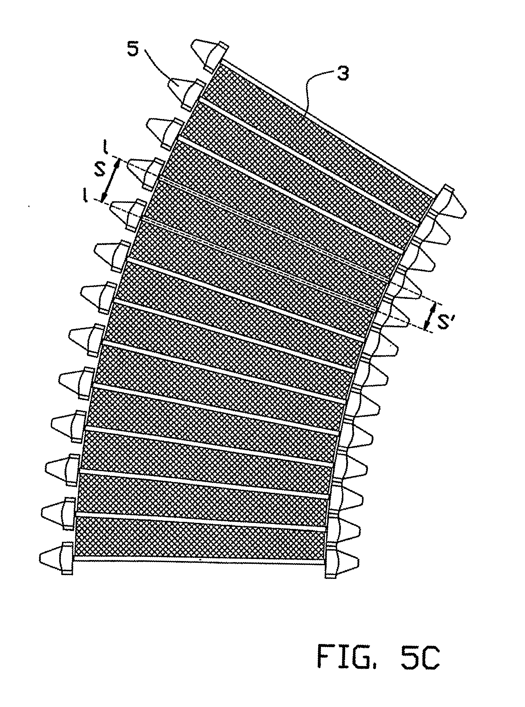

Figures 5A-5C show a conveyor belt for a conveyor device according to the invention, wherein 5A shows the situation of the conveyor belt 2 in relaxed condition, that means not confined in the conveyor device 1, wherein the compressible elements 3 are in a non-compressed condition. Again compressible elements 3 alternating with rigid elements 5 are incorporated in the conveyor belt 2. The longitudinal axes I here have a mutual distance S and are substantially parallel.

Figure 5B shows the conveyor belt 2 of figure 5A in pre-biassed condition, wherein the compressible elements 3 are compressed to such an extent that the spacers 12 of the rigid elements touch each other. In the relaxed condition of figure 5A the pitch in this situation is S, that means the distance S between the centre lines or the longitudinal axes I of the rigid elements 5 for instance approximately 17 units, and in compressed condition this pitch S' is reduced to approximately 12-13, for instance 12.6 units. For preventing chinks between the rigid elements 5 and the compressible elements 3, the compressible elements 3 and the rigid elements 5 in this embodiment are glued together at least along the conveyance surface 2.

In figure 5C the situation of the conveyor belt in a bend or curve is shown. At the inner side of the bend the distance S is smaller than in the outer bend. The longitudinal axes of the rigid elements 5 one to the other then are at an angle that does not equal 0. Because the compressible elements expand from an elastically compressed condition, the conveyance surface in the bends will only slightly deform. Moreover the objects that are moved will hardly change position on the conveyor belt. By entering a bend from a partially compressed condition, wherein at the outer side of the bend the compression is at least partially undone, hardly any force is exerted on a possible (glue) connection between the compressible and rigid elements. In addition the shape change from a relative point of view is smaller than for instance in case of stretching. The rigid elements moreover offer a supporting rigidity to the conveyor belt. It is easy to see that torsion can be realised in the conveyor belt. The rigid elements here offer support, guidance and pre-bias limitation and transmit the driving force. It may even be possible to provide various rigid elements, each having one of these.

The minimum radius of the bend is determined by the outward spring of the compressible elements at the outer side of the bend into their non-compressed condition. The compressed material may even be slightly stretched. However, this is not preferred. Tension may thus be brought onto a possible glue connection, or an opening can be created in the conveyance surface. The spacers 12 prevent that a compressible element is further compressed. It is moreover preferred that the driving force is transmitted via said spacers 12.

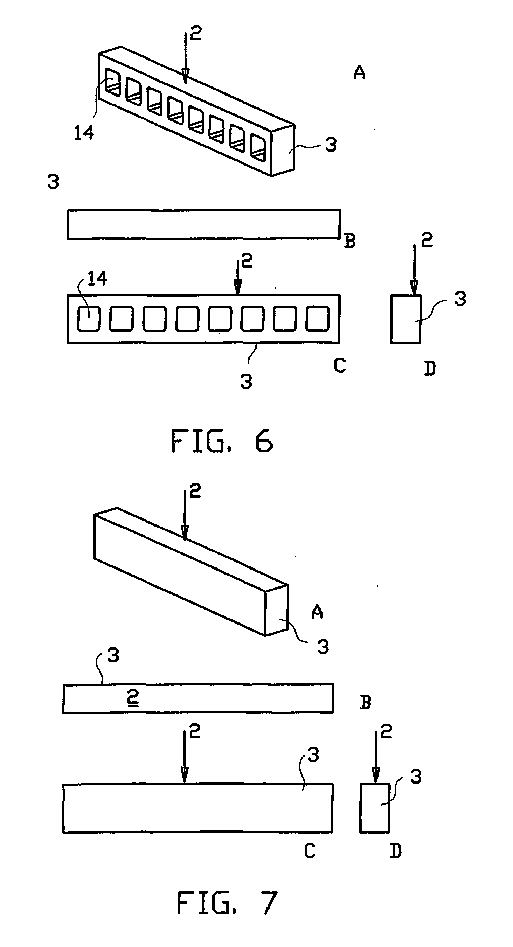

The figures 6-10 show various embodiments of the compressible elements 3 in various views in which A each time is a diagonal perspective view, B a top view, C a front view and D a side view.

Figures 6A-D show a compressible element 3 provided with recesses 14, that means holes 14, which extend over the width of the compressible element. Due to these holes 14 the compression force is reduced and moreover weight is reduced. The compressing element in this example is for instance made of a compressible synthetic material. This may be a solid material or a foamed synthetic material.

Figures 7A-7D show various views of a solid compressible element 3. In this solid embodiment the compressible element 3 preferably is made of a soft, springy, foamed synthetic material. A solid synthetic material that is resilient can also be opted for. A soft springy foamed synthetic material however is preferred, wherein the surface is composed such that in compressed condition and in cooperation with various similar elements it results in an as level as possible conveyance surface 2.

The compressible elements in this case are substantially beam-shaped, and extend over almost the full width B of the conveyor belt. Here they also extend over nearly the full thickness of the conveyor belt. Preferably a compressible foamed synthetic material is chosen, which, when compressed in one direction, does not or hardly deforms in the directions perpendicular to the direction of the compressing force. Particularly a compressible element is compressed here in the conveyance direction A, and in the process hardly, if at all, transforms the conveyance surface.

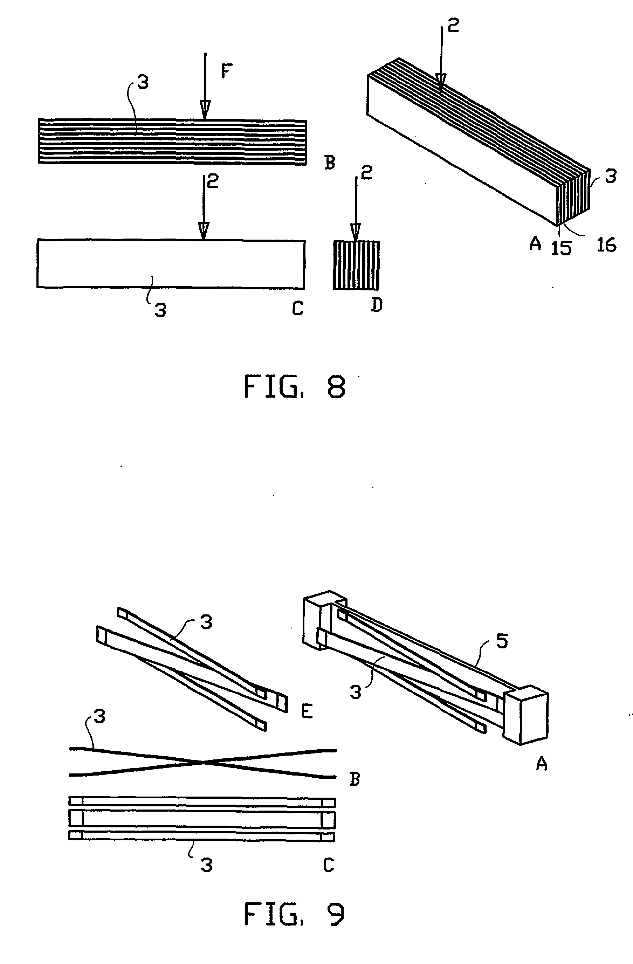

Figures 8A-8D show an embodiment of a compressible element 3, here designed laminated with compressible layers 16 alternating with rigid layers 15. As a result a compressible element 3 is created that is compressible substantially only along the conveyance direction and which is able to offer a certain torsion rigidity and supporting rigidity.

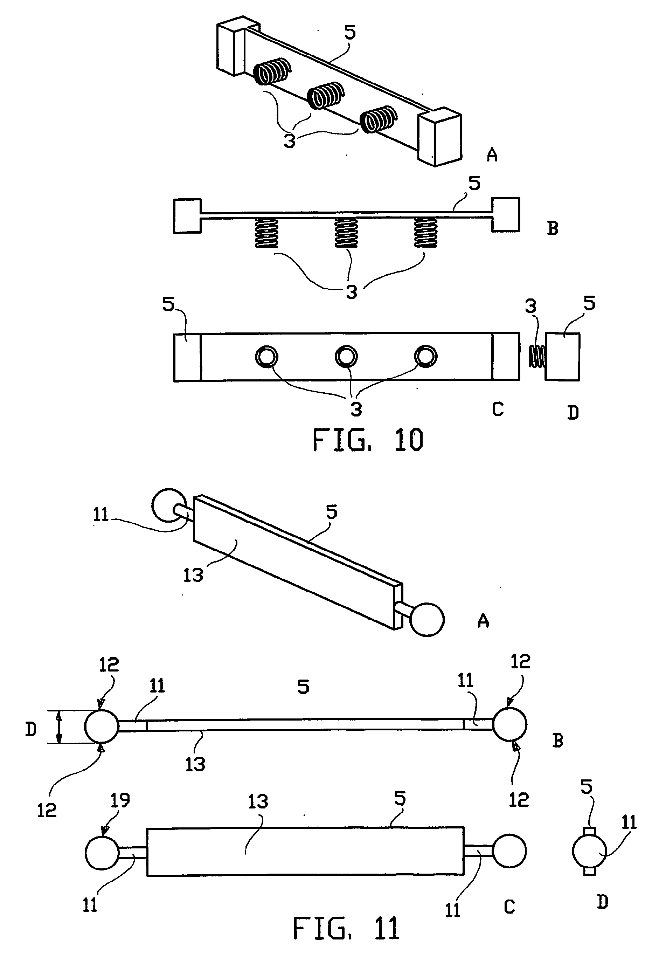

Figures 9A-D and 10A-D show particular embodiments of rigid and compressible elements. In figures 9A-D the compressible elements are composed of leaf springs. Said leaf springs may be formed as one part from a leaf spring sheet. The leaf spring elements are arranged between the rigid elements 5. It is even possible to form the rigid elements 5 and the compressible elements 3 as one unity.

Figures 10A-D show an assembly of compressible elements 3 and rigid elements 5, wherein the compressible elements 3 consist of spiral springs 3 which with their longitudinal axis are arranged perpendicular to the compressible elements and parallel to the conveyance direction A. Just like in figures 9A-D it is possible to design the rigid elements and the compressible elements in this way as one unity.

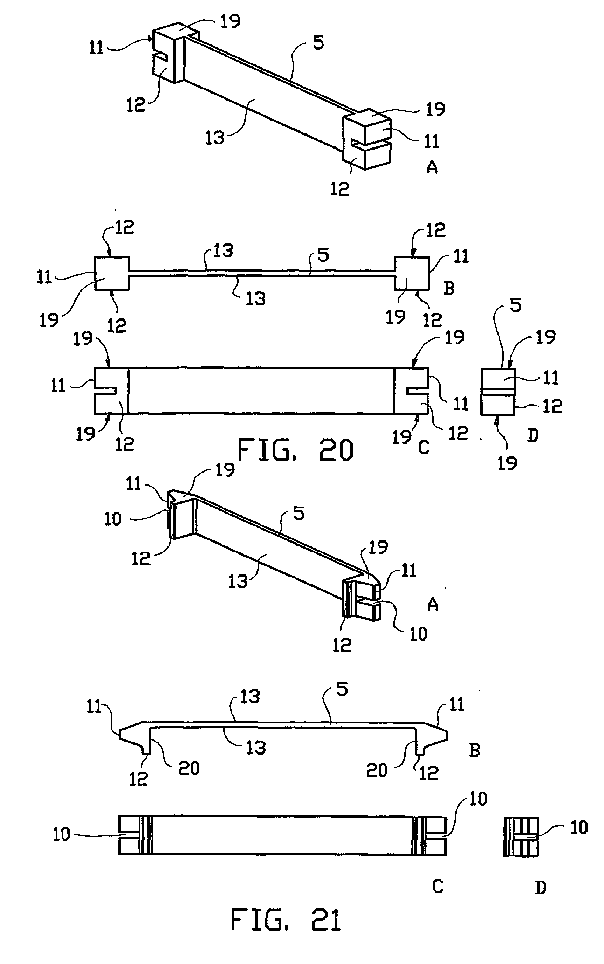

Figures 11-27 show various embodiments of the rigid elements 5. Said rigid elements are each suitable for an own manner of driving and each have their own field of utilisation. Some of the rigid elements shown, have been developed to be easily produced, and a number of the embodiments have been developed to offer an optimal stiffness or optimal engagement surface for driving. The rigid elements may be of metal such as steel or aluminium or the like. If so desired it is also possible to produce the rigid elements of synthetic material, fibre-reinforced synthetic material or the like. An advantage of such synthetic materials is that the rigid elements 5 can easily and cheaply be produced in large numbers using for instance an injection moulding process. Moreover the stiffness in various directions is more easily designed and set, which is a particular advantage of this use. In addition the resulting conveyor belt 2 is lightweight.

In the figures 1 1-27 the rigid elements are each time provided with a stop surface 13 for the compressible elements, spacers 12 for adjusting the degree of compression of the compressible elements, engagement members 11 on either side of the rigid elements, onto which engagement means are able to engage in order to exert a force on the rigid elements in the conveyance direction A, and stops 19 onto which guides are able to engage to guide the conveyor belt along the conveyance path.

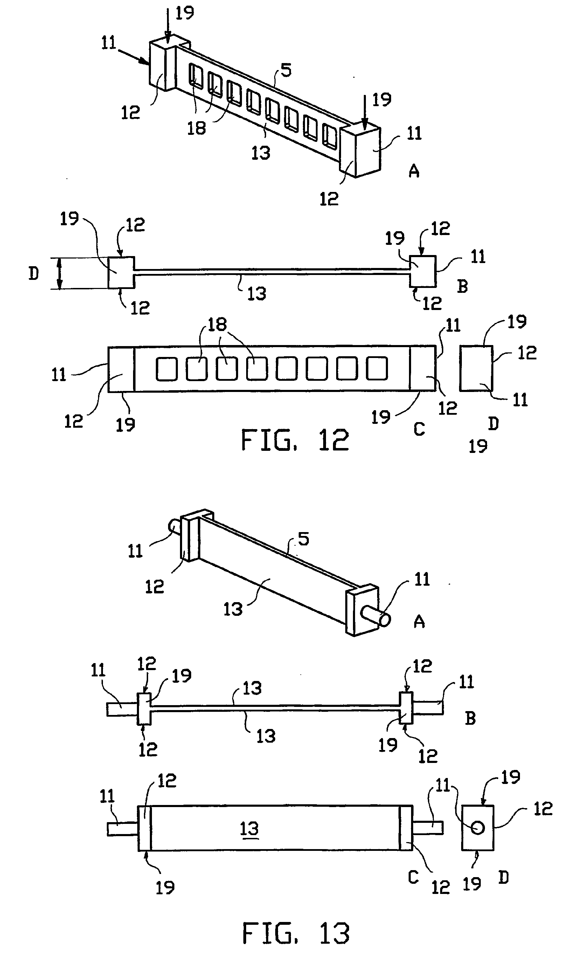

In figure 12 the rigid element is provided with holes 18 to reduce weight. The engagement members 11 1 in this case are flat ends onto which for instance a friction drive is able to engage or as is later explained, for instance a magnetic drive or otherwise a drive that is able to exert a force on the surface.

The guide means for guiding the conveyor belt along a conveyance path is in this case designed for instance by a lower guide and upper guide that engage onto the surfaces 19.

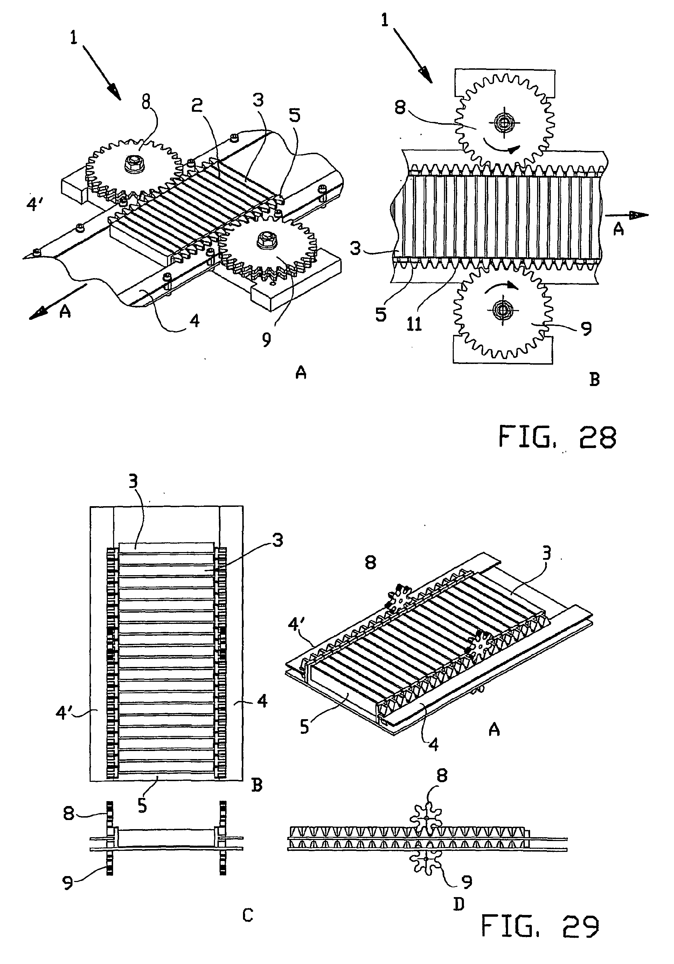

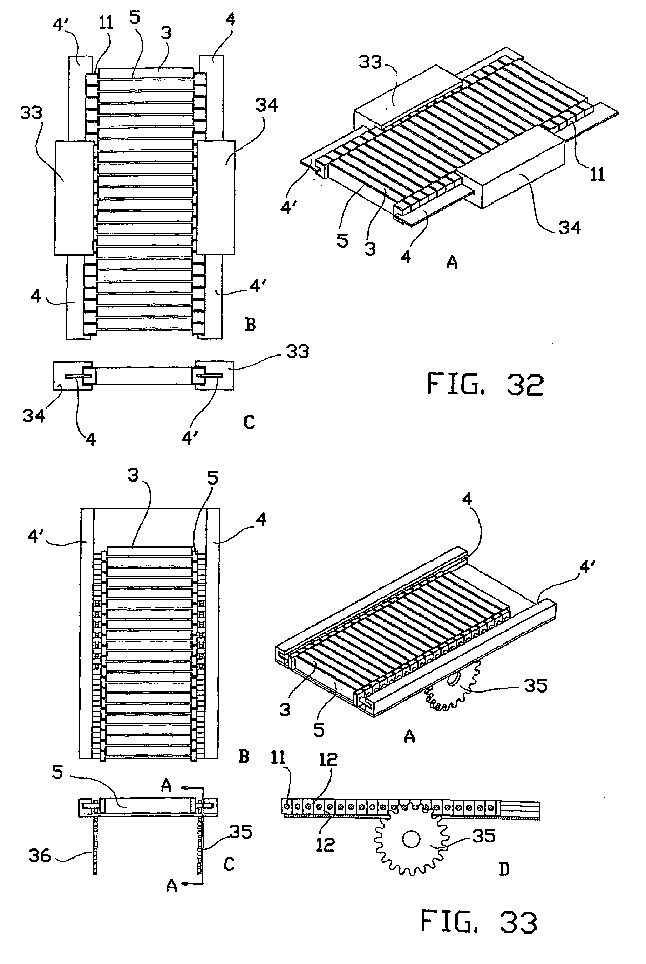

In figure 13 a rigid element is shown provided with engagement means 11 for for instance a sprocket drive 11 that will be further explained below in figure 29 and 33.

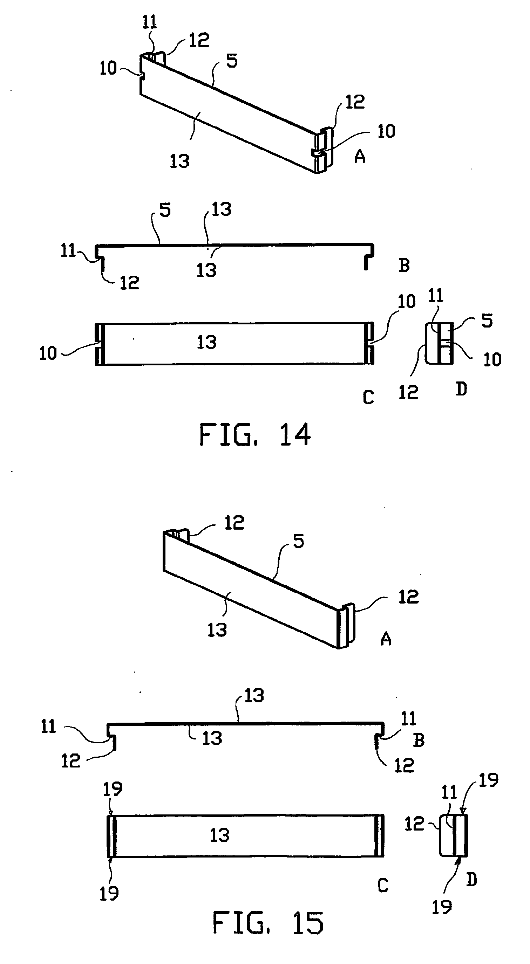

Figures 14A-D, 15A-D, 16A-D, 17A-D show an embodiment of the rigid elements that are easy to manufacture from a flat plate section. In this case the ends are turned for forming spacers 12 the engagement members 1 for the drive and the guide members, for instance guiding grooves 10. An advantage of these embodiments of the rigid elements is that they can easily be mass-produced.

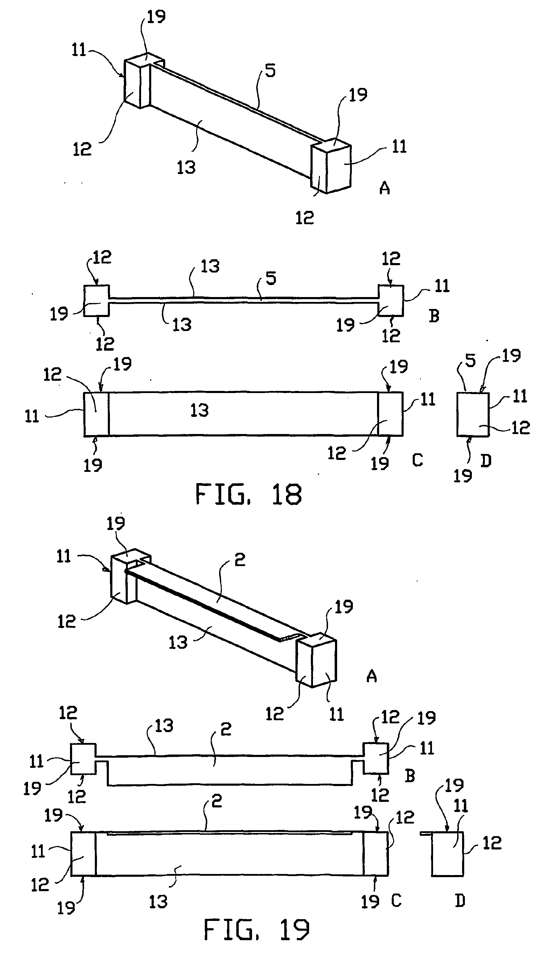

Figure 18 shows a very simple embodiment of a rigid element provided with a stop surface or abutment surface 13 for the compressible elements, and a practically block-shaped end provided with guide surfaces 19 for guiding and keeping the rigid elements, spacers surfaces 12 and surfaces 11 onto which the drive means are able to engage, along a conveyance path.

In figure 19 a rigid element is shown like in figure 18, however this time provided with a conveyance surface forming part 2, which in the conveyance direction extends perpendicular to the abutment surface 13 for forming a rigid and practically closed conveyance surface. When said conveyance surface 2 is made of a metal or heat resistant or scratch free synthetic material, this rigid element is preferred in conveyor devices used with for instance hot or scratching or possibly conveyor damaging products. The conveyance surface in this embodiment extends at one side of the conveyance surface of the rigid element and in connection with several rigid elements form a closed surface. It is of course also possible to let the conveyance surface extend to both sides to such an extent that they abut each other when the spacers 12 of consecutive rigid elements touch each other.

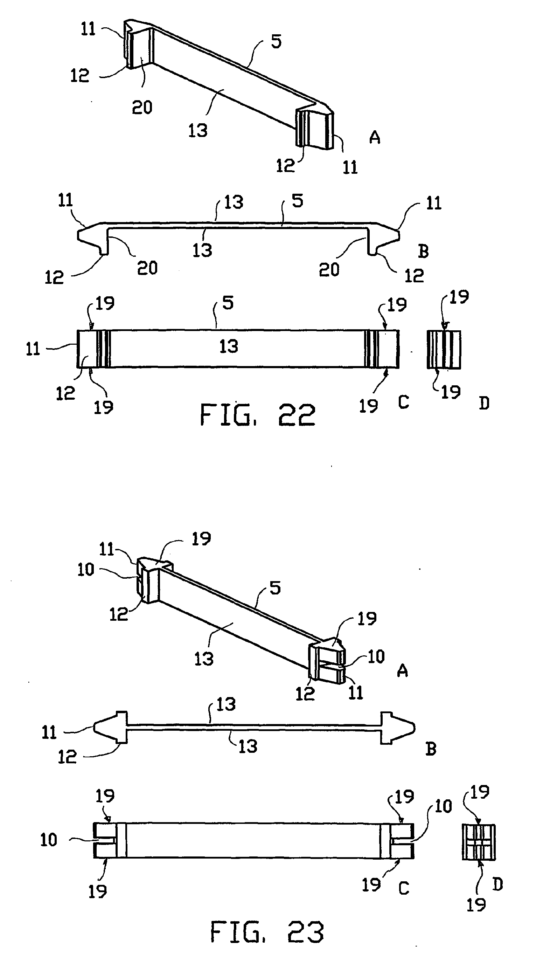

Figure 21 shows an embodiment of a rigid element wherein the drive substantially corresponds to the one shown in the preceding figures 5, wherein this time however the spacers 12 and engagement members 11 extend to one side only.

Figure 22 shows a rigid element, corresponding to figure 21, here provided with guide surfaces 19 for guiding.

The distance of the rigid elements 5, which are also used in the conveyor belt as shown in among others figures 5A and 5B, is shown in more detail and views in figure 23. In this embodiment the engagement members 11 are toothed wheel cams.

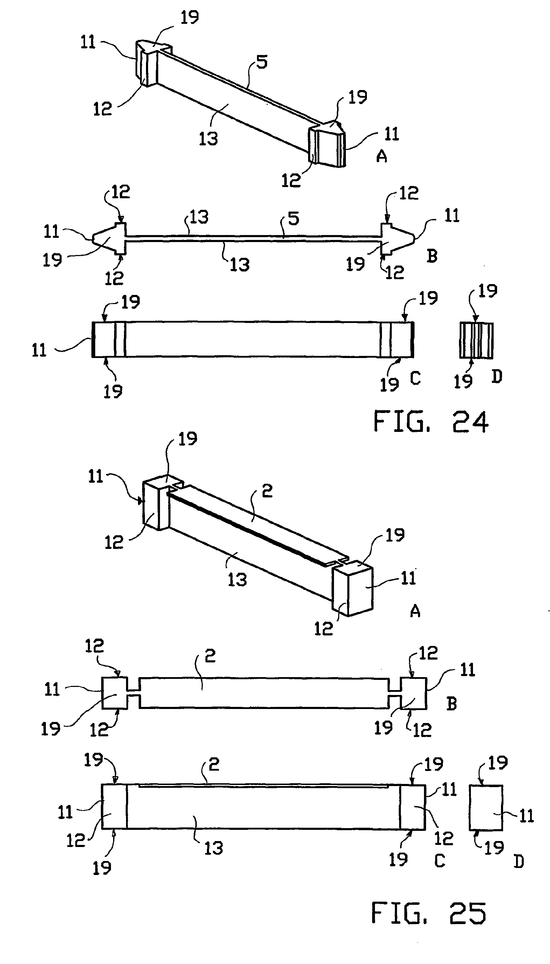

Figure 24 shows a rigid element like figure 23, however, this time not provided with a guiding groove. In this embodiment for instance the surfaces 19 may serve as engagement for the guide means.

Figure 25 shows a rigid element 5, this time provided with a conveyance surface forming part as also described in figure 19, wherein the conveyance surface part extends on both sides of the rigid element.

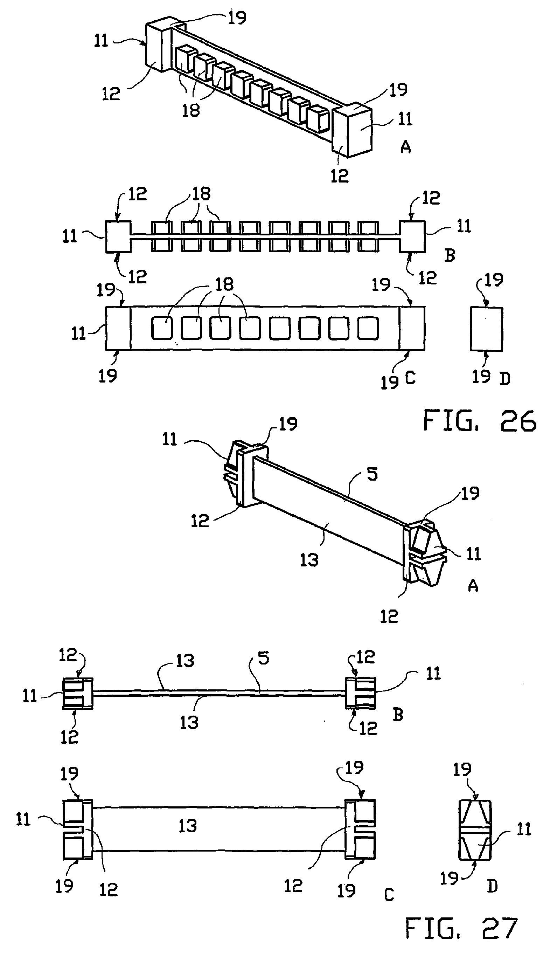

In figure 26 a rigid element 5 is shown provided with extra protruding members 18 that form extra stop surfaces for a next rigid element. If so desired these members of consecutive elements may be shaped such that, when the rigid elements are used consecutively in a conveyor belt, they partially fall into each other due to which additional stiffness of the conveyor belt is realised.

Figure 27 shows a rigid element provided with engagement members 1 that form toothed wheel cams which can be engaged for driving the conveyor belt from either the upper side of the conveyor belt or from the lower side of the conveyor belt.

Figures 28-33 show various possibilities of driving the conveyor belt according to the invention.

Figure 28A shows a perspective view and figure 28B shows a top view of a conveyor belt having a gear-wheel drive, wherein the toothed wheels are situated parallel to the plane of conveyance. In figure 28A a part of the rigid and compressible elements have been left out for the sake of clarity. The toothed wheels 8 and 9 engage onto the engagement members 11 which here form toothed wheel cams.

Figure 29A shows a perspective view, 29B a top view, 29C a front view and 29D a side view of a conveyor belt driven by means of toothed wheels which if so desired are placed at the upper side or at the lower side of the conveyor belt.

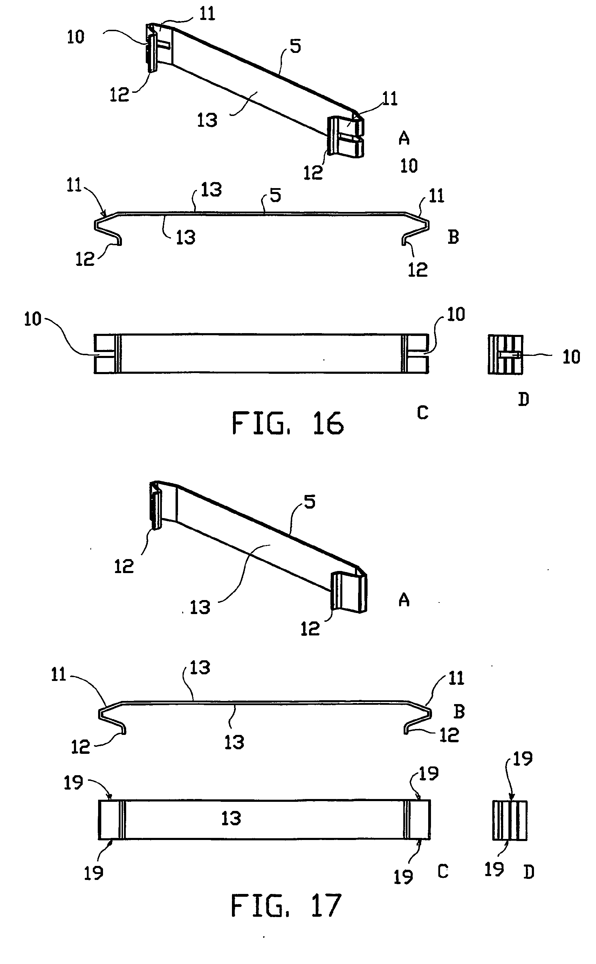

When the toothed wheels 8 and 9 are placed at the lower side of the belt, said toothed wheels may for instance be mutually connected by means of a rigid shaft, so that drive on both sides is practically simultaneous. In this case the toothed wheels 8 at the upper side of the belt may for instance also be connected through to the toothed wheels 9 at the lower side for realising an even more stable drive, or be free-running for stabilising the drive. For each drive depicted in figures 29A-D for instance the rigid elements shown in figures 17A-27D are suitable.

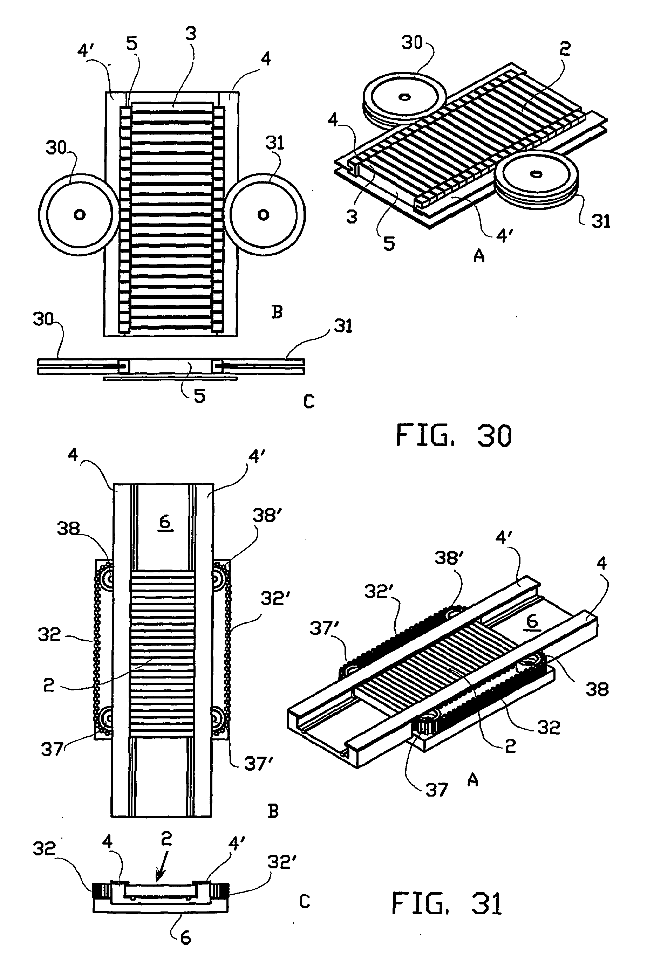

Figures 30A-D show a drive of the conveyor belt by means of friction bevel gears 30 and 31 on either side of the conveyor belt. The friction bevel gears here are provided with grooves so that they are able to rotate unimpeded by the side guide 4 and 4'.

Figures 31A-31C show a perspective view (31A), a top view (31B) and a front view (31C), respectively, of a conveyor device according to the invention provided with a synchronous-belt drive. For such a drive for instance the rigid elements as shown in figures 14, 15 are most suitable. An advantage of this drive is that it engages over a longer path so that a more even drive can occur.

Figure 32 shows a drive of the conveyor device by means of for instance magnetic drive. To that end for instance the rigid elements 5 may at the surfaces (see for instance figure 18, the surfaces 11) be provided with magnets wherein the connecting axis of the north and south poles of the magnets are for instance oriented parallel to the conveyance direction. In this drive the drive elements 33 and 34 for instance provide a changing magnetic field along the conveyance direction, as a result of which the rigid elements are subjected to a force in the direction of the conveyance direction. As a result an almost friction-free drive can be realised which is able to take place in a highly stable manner as a result of which little disruption of the course of the conveyor belt occurs.

Figures 33A-33D show views of a sprocket drive wherein sprocket wheels 35, 36 are placed at the lower side of the conveyor belt. Said sprocket wheels 35, 36 engage onto the engagement members 11. Rigid elements as for instance shown in figure 13 are suitable for this. In the manner shown in figures 33A-33D it is possible to for instance let the drive take place entirely under the conveyor belt. Optionally it is possible to mutually connect the sprocket wheels 35 and 36 by means of a rigid rod as a result of which an even drive of the belt is possible. It is also possible to provide each sprocket wheel 35, 36 with a separate electro motor, and to connect said electro motors one to the other by means of a regulating unit for stably driving the conveyor belt. The engagement members of the rigid elements 5 here run in grooves 4, 4' of the conveyor device.

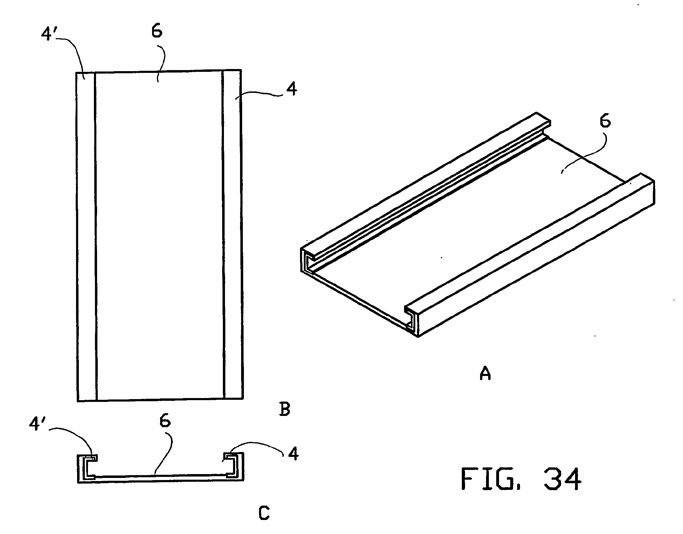

Figure 34A-34D show views of a part of a guide of a conveyor device according to the invention. Said guide is provided with a bottom plate 6 by means of which a closed or practically closed lower side can be realised. The side guides 4, 4' depicted here are suitable for guiding rigid elements as depicted in for instance figures 11, 12, 14, 15, 16, 17, 18, 19 etcetera. By means of such a support element provided with guide members 4 and 4' a practically closed conveyor device can be realised.

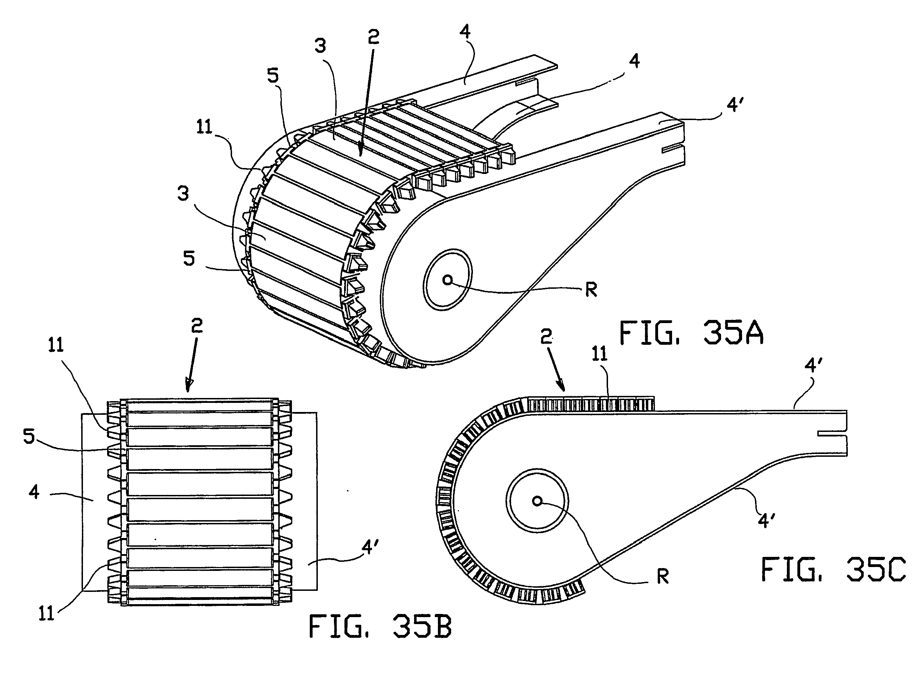

Figures 35A-C show an embodiment of a return section of a conveyor device according to the invention. Because of the conveyor belt consisting of compressible elements 3 alternated with rigid elements 5, the circulation shown about a horizontal axis R is easy to realise. The guides 4, 4' define the path of the conveyor belt. With the conveyor belt according to the invention a circulation can even be realised about an axis that is at an angle to a horizontal line. Due to its nature the conveyor belt can also run upwards or downwards to for instance another level and further continue horizontally. When use is made of the return section shown or a similar one, a conveyor device can be realised which for instance makes a single squared bend.

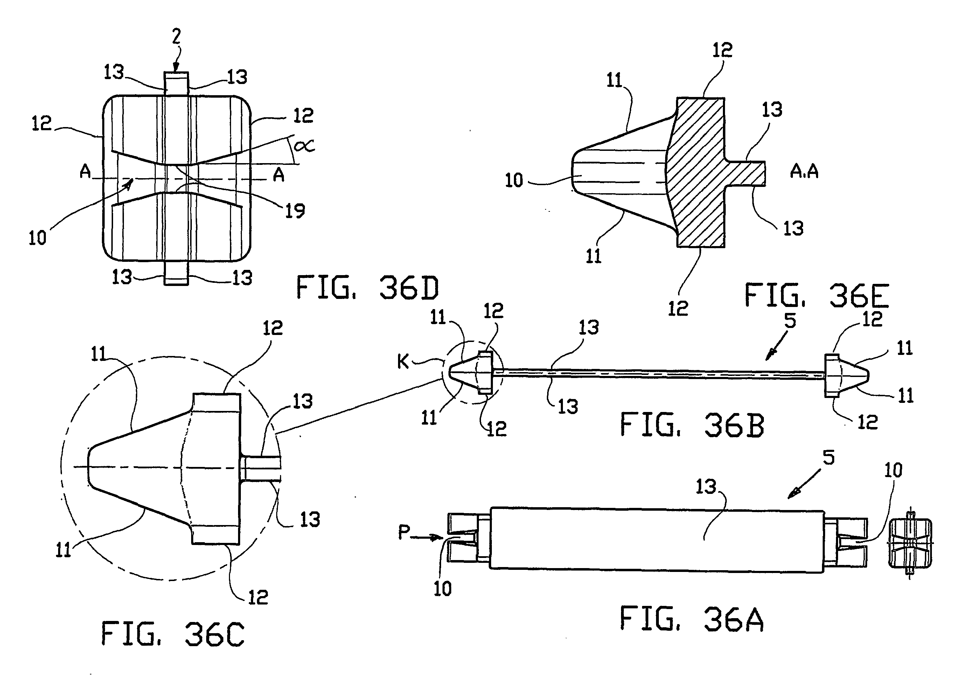

Figures 36A-36E show various views of a rigid element 5 of figure 4 in more detail. Figures 36A and 36B here show a complete image to indicate the detail views.

Figure 36C shows a top view in detail of engagement member 11, wherein the engagement surfaces 11 are indicated onto which a drive engages and is able to exert a pushing force. The spacers 12 are also shown in detail. In general, in parts of the conveyor belt that go straight on, consecutive rigid elements 5 will touch each other near the surfaces indicated with 12 when the conveyor belt is operative. As a result the degree of pushing in or compression of the compressible elements will be limited, due to which the conveyance surface will be almost level and closed. In bends, at the end of the rigid elements that runs at the outside, room will be created between these surfaces to cater for the difference in length of the conveyor belt between the inner bend and the outer bend. The compressible elements are then able to expand so that a closed surface is maintained. Moreover, in case of a right choice of compressible synthetic material, the conveyance surface need hardly deform, if at all.

Figure 36D shows a view P (see figure 36A) of the rigid element. It can clearly be seen here that the groove 10 tapers to the inside at an angle α at both sides. As a result a possible running out of true in the bends is further prevented. The groove has surfaces 19 that form abutment surfaces for a tongue guide (4, 4' is for instance figure 1) as a result of which a force can be exerted on the tongue guides 4, 4' to define a conveyance path.

For the sake of clarity a cross-section along line AA of figure 36D is also shown.

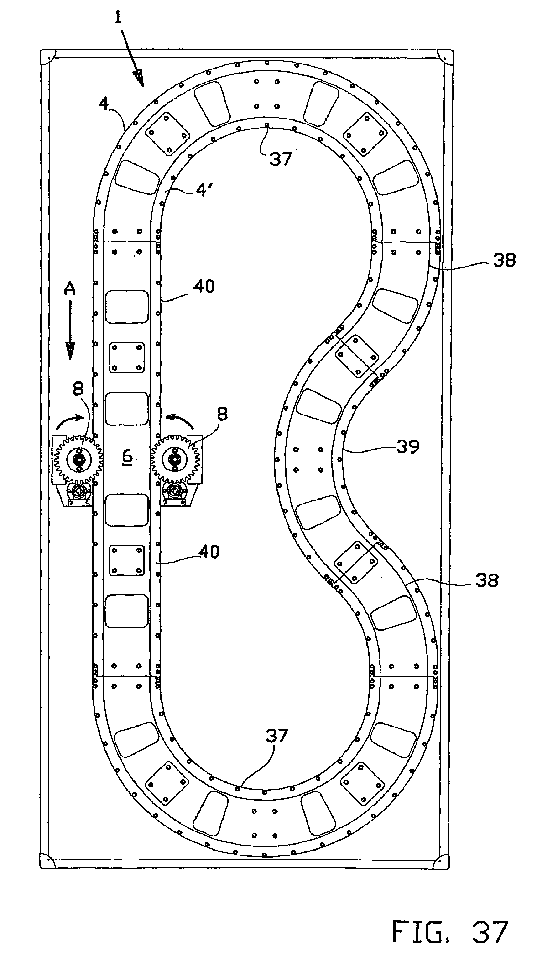

Figure 37 shows a top view of a possible embodiment of a conveyor device having a conveyance path having several bends. Here the framework with guides 4, 4' is built up from elements 37-40, with frame parts 40 straight path sections, frame parts 37 180° path sections, frame part 39 an 90° path section and frame parts 38 45° path sections. These standardised elements together make it possible to realise almost every conveyance path. The invention to that end regards an assembly of frame parts, provided with a guide and with connection parts to connect several frame parts into a conveyance path wherein the guides run along the conveyance path.

It will be clear that the above description is made to illustrate the operation of preferred embodiments of the invention, and not to limit the scope of the invention. The scope of the invention will only be limited by the following claims. Starting from the above elucidation many variations that fall within the scope of the present invention will be evident to an expert.

## Claims

1. Conveyor device (1) comprising a conveyor belt (2) having a conveyance surface for conveying in a conveyance direction (A) along a conveyance path, wherein the conveyor belt comprises elastically compressible elements (3) which are compressible in the conveyance direction (A) and rigid elements (5) that are rigid in the conveyance direction (A), the rigid elements (5) and compressible elements (3) are provided alternately, **characterised in that** the compressible elements (3) are pre-biased by a compression force (F) that is parallel to the conveyance direction (A) to at least partially compress the compressible elements (3), to an extent that in a curve the compressible elements will not expand beyond their uncompressed shape.

2. Conveyor device according to claim 1, wherein the rigid elements comprise at least one spacer for limiting the pre-biasing of the conveyor belt, wherein preferably the at least one spacer extends parallel with respect to the conveyance direction.

3. Conveyor device according to any one of the preceding claims, wherein the rigid elements comprise an abutment surface for exerting a pre-biasing force on the compressible elements, wherein preferably the abutment surface extends over substantially the height of the conveyor belt, wherein preferably the abutment surface extends over substantially the width of the conveyor belt, wherein preferably the abutment surface comprises a plate shaped member situated between compressible elements.

4. Conveyor device according to any one of the preceding claims, wherein the conveyance surface has a conveyance surface width and the conveyor belt has a conveyor belt height, the width and the height defining a conveyor belt cross section, and the rigid elements comprise members extending beyond the conveyor belt cross section, wherein preferably the members of the rigid elements extend beyond the conveyance surface width.

5. Conveyor device according to any one of the preceding claims, wherein the conveyor belt forms a circulating, closed belt, preferably having a substantially closed conveyance surface.

6. Conveyor device according to any one of the preceding claims, wherein the compressible elements are elastically compressible synthetic elements, preferably made of an elastic, foamed synthetic material, preferably substantially block-shaped having a width practically equal to the width of the conveyor belt.

7. Conveyor device according to any one of the preceding claims, furthermore provided with a guide for guiding the conveyor belt along the conveyance path.

8. Conveyor device according to any one of the preceding claims, wherein the conveyor belt is provided with elements that are rigid in the conveyance direction, wherein the longitudinal axes of the rigid elements are situated along the width of the conveyor belt, and can be mutually moved in the conveyance direction.

9. Conveyor device according to any one of the preceding claims, wherein in the conveyor belt width rigid elements extend between the compressible synthetic elements, which rigid elements are rigid in the conveyance direction, wherein preferably the rigid elements have an abutment surface between the compressible synthetic elements that extends over nearly the conveyor belt width, wherein preferably the conveyor device is furthermore provided with a drive for driving the conveyor belt, and the rigid elements each comprise at least one engagement member onto which the drive is able to engage for driving the conveyor belt, preferably adapted for pushingly driving the conveyor belt.

10. Conveyor device according to any one of the preceding claims, provided with a plane of conveyance for conveyance thereon along a conveyance path, comprising:
- a supporting frame;
- a circulating conveyor belt having a conveyance surface as plane of conveyance, and
- a drive for pushingly driving the conveyor belt,
wherein
- the supporting frame is provided with a guide for guiding the conveyor belt along the conveyance path;
- the conveyor belt in the conveyance direction alternating in conveyance direction compressible elements having at least one stop transverse to the conveyance direction, having surfaces which in cooperation substantially form the conveyance surface, and for at least 10 % compressed in the conveyance direction, and rigid elements provided with an engagement member for having the drive engage onto it in order to when operative exert a driving force onto it in the conveyance direction in order to propel the conveyor belt when operative, with a guide member in order to in cooperation with the guide, guide the conveyor belt along a conveyance path, and the rigid elements have a longitudinal axis transverse to the conveyance direction, and the longitudinal axes are displaceable with respect to each other, wherein the angle between the longitudinal axes of the rigid elements is changeable in the plane of conveyance when the conveyor device is operative, during conveying.

11. Conveyor device according to claim 10, wherein the conveyor belt furthermore comprises rigid elements between the compressible segments, provided with engagement members for offering an engagement to a drive of the conveyor belt, guide members for offering an engagement to a guide in order to guide the conveyor belt along the conveyance path, and stop members for transmitting a driving force from the drive onto the compressible segments.

12. Synthetic part, suitable and intended for use as a compressible synthetic element in a conveyor device according to any one of the preceding claims, having a closed conveyance surface that extends over the length and the width and having two stop surfaces from the plane of conveyance, wherein the plane of conveyance of the synthetic part, when compressed, for 50% at the most along the length, deforms less than 10% of the height of the synthetic part, which part is made of a foamed synthetic material having substantially closed cells.

13. Connection part, suitable and intended for use as rigid element in a conveyor device according to any one of the preceding claims, comprising a rigid plate part having stop surfaces on both sides, and at both ends provided with engagement members onto which a force perpendicular to the stop surfaces is able to engage, guide members onto which a force in the plane of the plate part is able to engage and spacers which extend from the plane of the plate part to limit the compression of the compressible synthetic element, which part is made of metal, preferably selected from the group of aluminium, iron and steel that may or may not be stainless steel, or, made of a rigid synthetic material, preferably selected from the group of PVC, polycarbonate, nylon, that may or may not be reinforced with fibres, such as wood, carbon fibre, glass fibre, aramid or a combination thereof.

## Patentansprüche

1. Fördervorrichtung (1), die ein Förderband (2) aufweist, das eine Transportoberfläche zum Fördern in einer Transportrichtung (A) entlang einem Transportweg aufweist, wobei das Förderband elastisch zusammendrückbare Elemente (3) aufweist, die in der Transportrichtung (A) zusammendrückbar sind, sowie starre Elemente (5), die in der Transportrichtung (A) starr sind, wobei die starren Elemente (5) und die zusammendrückbaren Elemente (3) abwechselnd vorgesehen sind, **dadurch gekennzeichnet, dass** die zusammendrückbaren Elemente (3) durch eine Zusammendrückkraft (F) vorgespannt sind, die parallel zur Transportrichtung (A) ist, um zumindest teilweise die zusammendrückbaren Elemente (3) zusammenzudrücken, bis zu einem Ausmaß, dass sich in einer Kurve die zusammendrückbaren Elemente nicht über ihre nicht zusammengedrückte Form aufweiten.

2. Fördervorrichtung nach Anspruch 1, bei welcher die starren Elemente zumindest ein Abstandsstück zum Begrenzen des Vorspannens des Förderbandes aufweisen, wobei sich vorzugsweise das zumindest eine Abstandsstück parallel zur Transportrichtung erstreckt.

3. Fördervorrichtung nach einem voranstehenden Ansprüche, bei welcher die starren Elemente eine Anlageoberfläche zum Ausüben einer Vorspannkraft auf die zusammendrückbaren Elemente aufweisen, wobei sich vorzugsweise die Anlageoberfläche über im Wesentlichen die Höhe des Förderbandes erstreckt, wobei sich vorzugsweise die Anlageoberfläche im Wesentlichen über die Breite des Förderbandes erstreckt, wobei vorzugsweise die Anlageoberfläche ein plattenförmiges Teil aufweist, das zwischen zusammendrückbaren Elementen angeordnet ist.

4. Fördervorrichtung nach einem voranstehenden Ansprüche, bei welcher die Transportoberfläche eine Transportoberflächenbreite aufweist, und das Förderband eine Förderbandhöhe aufweist, wobei die Breite und die Höhe einen Förderband-Querschnitt festlegen, und die starren Elemente Teile aufweisen, die sich über den Förderband-Querschnitt hinaus erstrecken, wobei sich vorzugsweise die Teile der starren Elemente über die Transportoberflächenbreite hinaus erstrecken.

5. Fördervorrichtung nach einem voranstehenden Ansprüche, bei welcher das Förderband ein umlaufendes, geschlossenes Band bildet, das vorzugsweise eine im Wesentlichen geschlossene Transportoberfläche aufweist.

6. Fördervorrichtung nach einem voranstehenden Ansprüche, bei welcher die zuammendrückbaren Elemente elastisch zusammendrückbare Kunststoffelemente sind, die vorzugsweise aus einem elastischen, geschäumten Kunststoffmaterial hergestellt sind, vorzugsweise im Wesentlichen blockförmig, mit einer Breite praktisch gleich der Breite des Förderbandes.

7. Fördervorrichtung nach einem voranstehenden Ansprüche, die weiterhin mit einer Führung zum Führen des Förderbands entlang dem Transportweg versehen ist.

8. Fördervorrichtung nach einem voranstehenden Ansprüche, bei welcher das Förderband mit Elementen versehen ist, die starr in der Transportrichtung sind, wobei die Längsachse der starren Elemente entlang der Breite des Förderbandes angeordnet sind, und die gegenseitig in der Transportrichtung bewegt werden können.

9. Fördervorrichtung nach einem voranstehenden Ansprüche, bei welcher sich in Richtung der Breite des Förderbandes starre Elemente zwischen den zusammendrückbaren Kunststoffelementen erstrecken, welche starren Elemente in der Transportrichtung starr sind, wobei vorzugsweise die starren Elemente eine Anlageoberfläche zwischen den zusammendrückbaren Kunststoffelementen aufweisen, die sich über nahezu die Breite des Förderbandes erstreckt, wobei vorzugsweise die Fördervorrichtung darüber hinaus mit einem Antrieb zum Antreiben des Förderbandes versehen ist, und die starren Elemente jeweils zumindest ein Eingriffsteil aufweisen, mit welchem der Antrieb zum Antreiben des Förderbandes in Eingriff gelangen kann, vorzugsweise zum Antreiben des Förderbandes durch Schieben ausgebildet.

10. Fördervorrichtung nach einem voranstehenden Ansprüche, die mit einer Transportebene versehen ist, für den Transport auf dieser entlang einem Transportweg, wobei vorgesehen sind:
- ein Traggerüst;
- ein umlaufendes Förderband, das eine Transportoberfläche als Transportebene aufweist, und
- ein Antrieb zum Antreiben des Förderbandes durch Schieben,
wobei
- das Traggerüst mit einer Führung zum Führen des Förderbandes entlang dem Transportweg versehen ist;
- das Förderband in der Transportrichtung abwechselnd in Transportrichtung zusammendrückbare Elemente, die zumindest einen Anschlag quer zur Transportrichtung aufweisen, und Oberflächen aufweisen, welche zusammenwirkend im Wesentlichen die Transportoberfläche bilden, und um zumindest 10% in der Transportrichtung zusammengedrückt sind, und starre Elemente aufweist, die mit einem Eingriffsteil zum Eingriff mit dem Antrieb versehen sind, um dann, wenn im Betrieb eine Antriebskraft auf es in der Transportrichtung ausgeübt wird, um das Förderband im betriebsfähigen Zustand nach vorn zu bewegen, mit einem Führungsteil, um zusammenwirkend mit der Führung das Förderband entlang einem Transportweg zu führen, wobei die starren Elemente eine Längsachse quer zur Transportrichtung aufweisen, und die Längsachsen in Bezug aufeinander verstellbar sind, wobei der Winkel zwischen den Längsachsen der starren Elemente in der Transportebene geändert werden kann, wenn die Fördervorrichtung betriebsfähig ist, während des Förderns.

11. Fördervorrichtung nach Anspruch 10, bei welcher das Förderband weiterhin starre Elemente zwischen den zusammendrückbaren Segmenten aufweist, die mit Eingriffsteilen zur Bereitstellung eines Eingriffs mit einem Antrieb des Förderbands versehen sind, Führungsteile zur Bereitstellung eines Eingriffs mit einer Führung, um das Förderband entlang dem Transportweg zu führen, und Anschlagteile zur Übertragung einer Antriebskraft von dem Antrieb auf die zusammendrückbaren Segmente.

12. Kunststoffteil, das zum Einsatz als ein zusammendrückbares Kunststoffelement in einer Fördervorrichtung gemäß einem der voranstehenden Ansprüche geeignet und gedacht ist, das eine geschlossene Transportoberfläche aufweist, die sich über die Länge und die Breite erstreckt, und zwei Anschlagoberflächen von der Transportebene aufweist, wobei die Transportebene des Kunststoffteils, wenn es zusammengedrückt ist, über höchstens 50% entlang der Länge, sich um weniger als 10% der Höhe des Kunststoffteils verformt, wobei dieses Teil aus einem geschäumten Kunststoffmaterial hergestellt ist, das im Wesentlichen geschlossene Zellen aufweist.

13. Verbindungsteil, das zum Einsatz als starres Element in einer Fördervorrichtung gemäß einem der voranstehenden Ansprüche geeignet und gedacht ist, und ein starres Plattenteil aufweist, welches Anschlagoberflächen an beiden Seiten aufweist, und an beiden Enden mit Eingriffsteilen versehen ist, mit welcher eine Kraft senkrecht zu den. Anschlagoberflächen in Eingriff gelangen kann, Führungsteile, mit welchen eine Kraft in der Ebene des Plattenteils in Eingriff gelangen kann, und Abstandsstücke, die sich von der Ebene des Plattenteils aus erstrecken, um das Zusammendrücken des zusammendrückbaren Kunststoffelements zu begrenzen, wobei das Teil aus Metall hergestellt ist, vorzugsweise ausgewählt aus der Gruppe von Aluminium, Eisen und Stahl, der Edelstahl sein kann oder nicht, oder aus einem starren Kunststoffmaterial hergestellt ist, vorzugsweise ausgewählt aus der Gruppe von PVC, Polycarbonat, Nylon, welche mit Fasern verstärkt sein können oder auch nicht, beispielsweise aus Holz, Kohlenstofffaser, Glasfaser, Aramid oder einer Kombination hieraus.

## Revendications

1. Dispositif transporteur (1) comprenant une courroie de transporteur (2) ayant une surface de transport pour transporter dans une direction de transport (A) le long d'un chemin de transport, dans lequel la courroie de transporteur comprend des éléments élastiquement compressibles (3) qui sont compressibles dans la direction de transport (A) et des éléments rigides (5) qui sont rigides dans la direction de transport (A), les éléments rigides (5) et les éléments compressibles (3) étant ménagés alternativement, **caractérisé en ce que** les éléments compressibles (3) sont pré-contraints par une force de compression (F) qui est parallèle à la direction de transport (A) afin de comprimer au moins partiellement les éléments compressibles (3) de sorte que, dans un virage, les éléments compressibles ne se dilatent pas au-delà de leur forme non comprimée.

2. Dispositif transporteur selon la revendication 1, dans lequel les éléments rigides comprennent au moins une entretoise pour limiter la pré-contrainte de la courroie de transporteur, dans lequel, de préférence, ladite au moins une entretoise s'étend parallèlement à la direction de transport.

3. Dispositif transporteur selon l'une quelconque des revendications précédentes, dans lequel les éléments rigides comprennent une surface de butée pour exercer une force de pré-contrainte sur les éléments compressibles, dans lequel de préférence la surface de butée s'étend sensiblement sur la hauteur de la courroie de transporteur, dans lequel de préférence la surface de butée s'étend sur sensiblement la largeur de la courroie de transporteur, dans lequel de préférence la surface de butée comprend un élément en forme de plaque situé entre des éléments compressibles.

4. Dispositif transporteur selon l'une quelconque des revendications précédentes, dans lequel la surface de transport a une largeur de surface de transport et la courroie de transporteur a une hauteur de courroie, la largeur et la hauteur définissant une section transversale de courroie de transporteur, et les éléments rigides comprennent des éléments s'étendant au-delà de la section transversale de la courroie de transporteur, dans lequel de préférence les pièces des éléments rigides s'étendent au-delà de la largeur de la surface de transport.

5. Dispositif transporteur selon l'une quelconque des revendications précédentes, dans lequel la courroie de transporteur forme une courroie fermée, circulante, ayant de préférence une surface de transport sensiblement fermée.

6. Dispositif transporteur selon l'une quelconque des revendications précédentes, dans lequel les éléments compressibles sont des éléments synthétiques élastiquement compressibles, de préférence réalisés en un matériau synthétique expansé élastique, de préférence sensiblement en forme de bloc ayant une largeur pratiquement égale à la largeur de la courroie de transporteur.

7. Dispositif transporteur selon l'une quelconque des revendications précédentes, doté en outre d'un guide pour guider la courroie de transporteur le long du chemin de transport.

8. Dispositif transporteur selon l'une quelconque des revendications précédentes, dans lequel la courroie de transporteur est dotée d'éléments, qui sont rigides dans la direction de transport, dans lequel les axes longitudinaux des éléments rigides sont situés sur la largeur de la courroie de transporteur, et peuvent être réciproquement déplacés dans la direction de transport.

9. Dispositif transporteur selon l'une quelconque des revendications précédentes, dans lequel, sur la largeur de la courroie de transporteur, des éléments rigides s'étendent entre les éléments synthétiques compressibles, lesdits éléments rigides sont rigides dans la direction de transport, dans laquelle de préférence les éléments rigides ont une surface de butée entre les éléments synthétiques compressibles qui s'étend sur presque toute la largeur de la courroie de transport, dans lequel de préférence le dispositif transporteur est en outre doté d'une commande pour entraîner la courroie de transporteur, et les éléments rigides comprennent chacun au moins un élément de prise, sur lequel la commande est en mesure de se mettre en prise, afin d'entraîner la courroie de transporteur, de préférence adaptée pour entraîner en poussée la courroie de transporteur.

10. Dispositif transporteur selon l'une quelconque des revendications précédentes, doté d'un plan de transport pour le transport dessus le long d'un chemin de transport, comprenant :
- un cadre de support ;
- une courroie de transporteur circulante ayant une surface de transport comme plan de transport, et
- une commande pour entraîner en poussée la courroie de transporteur,
dans lequel
- le cadre de support est doté d'un guide pour guider la courroie de transporteur le long du chemin de transport ;
- la courroie de transporteur dans la direction de transport alternant, dans la direction de transport, des éléments compressibles ayant au moins une butée transversale à la direction de transport, ayant des surfaces qui, en coopération, forment sensiblement la surface de transport, et pour au moins 10% comprimés dans la direction de transport, et des éléments rigides dotés d'un élément de prise pour faire mettre en prise la commande dessus afin qu'en fonctionnement, ils exercent une force d'entraînement dessus, dans la direction de transport, afin de propulser la courroie de transport lorsqu'elle est opérationnelle, avec un élément de guidage pour, en coopération avec le guide, guider la courroie de transporteur le long d'un chemin de transport, et les éléments rigides ont un axe longitudinal transversal à la direction de transport et les axes longitudinaux peuvent être déplacés les uns par rapport aux autres, dans lequel l'angle entre les axes longitudinaux des éléments rigides peut être modifié dans le plan de transport quand le dispositif transporteur est opérationnel, pendant le transport.

11. Dispositif transporteur selon la revendication 10, dans lequel la courroie de transporteur comprend en outre des éléments rigides entre les segments compressibles, dotés d'éléments de prise pour offrir une prise à une commande de la courroie de transport, des éléments de guide pour offrir une prise à un guide afin de guider la courroie de transporteur le long du chemin de transport, et des éléments d'arrêt pour transmettre une force d'entraînement depuis la commande sur les segments compressibles.

12. Partie synthétique, adaptée et destinée à l'utilisation comme élément synthétique compressible dans un dispositif transporteur selon l'une quelconque des revendications précédentes, ayant une surface de transport fermée qui s'étend sur toute la longueur et la largeur et ayant deux surfaces d'arrêt depuis le plan de transport, dans laquelle le plan de transport de la partie synthétique, quand elle est comprimée, sur 50% au plus de sa longueur, se déforme sur moins de 10% de la hauteur de la partie synthétique, ladite partie étant en matériau synthétique expansé, ayant des cellules sensiblement fermées.

13. Partie de raccordement, adaptée et destinée à être utilisée comme élément rigide dans un dispositif transporteur selon l'une quelconque des revendications précédentes, comprenant une partie de plaque rigide ayant des surfaces d'arrêt des deux côtés, et aux deux extrémités dotée d'éléments de prise sur lesquels une force perpendiculaire aux surfaces d'arrêt est capable de se mettre en prise, des éléments de guidage sur lesquels une force dans le plan de la partie de plaque est capable de se mettre en prise et des entretoises qui s'étendent depuis le plan de la partie de plaque, afin de limiter la compression de l'élément synthétique compressible, ladite partie est faite de métal, de préférence choisi dans le groupe constitué d'aluminium, fer et acier qui peut ou non être de l'acier inoxydable, ou faite d'un matériau synthétique rigide, de préférence choisi dans le groupe constitué de PVC, polycarbonate, nylon, qui peut être ou non renforcé avec des fibres, comme la laine, la fibre de carbone, la fibre de verre, l'aramide ou une combinaison de ceux-ci.
